# EUROPÄISCHE PATENTSCHRIFT

(11) **EP 3 543 090 B1**
(45) Veröffentlichungstag und Bekanntmachung des Hinweises auf die Patenterteilung: **31.03.2021**
(21) Anmeldenummer: 19154369.3
(22) Anmeldetag: 30.01.2019
(51) Int. Cl.: B62D 35/00

(54) **KRAFTFAHRZEUG-LUFTLEITVORRICHTUNG**
MOTOR VEHICLE AIR GUIDANCE DEVICE
DISPOSITIF DÉFLECTEUR D'AIR DE VÉHICULE AUTOMOBILE

(30) Priorität: 22.02.2018 DE 202018100975 U
(43) Veröffentlichungstag der Anmeldung: 25.09.2019
(73) Patentinhaber: Betterflow GmbH, 52072 Aachen (DE)
(72) Erfinder: Martin, Ingo, 52072 Aachen (DE); Buffo, Rainer, 50937 Köln (DE)
(74) Vertreter: Andrejewski - Honke Patent- und Rechtsanwälte Partnerschaft mbB

(56) Entgegenhaltungen:
- EP-A1- 2 765 064
- DE-A1-102009 014 860
- US-B1- 9 139 240

## Beschreibung

Die Erfindung betrifft eine Kraftfahrzeug-Luftleitvorrichtung, insbesondere für einen Lastkraftwagen (LKW), wobei zumindest ein flächiger Luftleitflügel in einem unteren Anschlussbereich eines Hecks des Fahrzeuges an das Fahrzeug anschließbar bzw. angeschlossen ist. - Im Fahrbetrieb von Fahrzeugen - vor allem von Lastkraftwagen - treten Luftverwirbelungen auf, die den Luftwiderstand des Fahrzeuges erhöhen und dadurch zumindest langfristig einen erhöhten Kraftstoffverbrauch bedingen. Die insbesondere im Fahrbetrieb von Lastkraftwagen über das Fahrzeug gelangende Luftströmung reißt im Heckbereich ab und dadurch entsteht hinter dem Fahrzeug ein nachteilhaftes Wirbelfeld (sogenannter Strömungsnachlauf). Durch diese Luftverwirbelungen wird der Luftwiderstand des Fahrzeuges in besonders unerwünschter Weise erhöht.

Aus dem Stand der Technik bzw. aus der Praxis sind bereits Maßnahmen zur Lösung dieses Problems mit Hilfe von Luftleitvorrichtungen bekannt. Insoweit wird insbesondere auf EP 2 765 064 A1 verwiesen. Hier wird eine Luftleitvorrichtung für Lastkraftwagen offenbart, bei der im Fahrbetrieb an den heckseitigen Kanten eines Trailers in Konturverlängerung des Trailers angeordnete und Luftleitflächen ausbildende Luftleitflügel vorgesehen sind. Diese Luftleitflügel sind mit Hilfe von Verstelleinrichtungen zwischen einer Betriebsstellung bzw. Fahrstellung und einer Verstaustellung jeweils um eine Schwenkachse verschwenkbar. Die Luftleitflügel sind im Fahrbetrieb sowohl an der Oberkante als auch an den Seitenkanten des Trailerhecks vorgesehen. Diese bekannten Maßnahmen haben sich grundsätzlich bewährt. Nichtsdestoweniger sind Verbesserungen möglich.

In der Praxis wurden bislang Luftleitvorrichtungen bzw. Luftleitflügel im unteren Heckbereich von Lastkraftwagen nicht vorgesehen, weil entsprechend den Vorschriften hier im Fahrbetrieb herausragende Bauelemente nicht zulässig sind. Das gilt am Heck von Lastkraftwagen bzw. von Trailern insbesondere in einem Abstandsbereich von 2 Metern über dem Erdboden, um eine ausreichende Crashsicherheit für nachfolgende Fahrzeuge, insbesondere PKWs zu gewährleisten.

Der Erfindung liegt das technische Problem zugrunde, eine Kraftfahrzeug-Luftleitvorrichtung anzugeben, die im Heckbereich von Fahrzeugen, insbesondere von Lastkraftwagen allen Anforderungen genügt, die den Luftwiderstand des Fahrzeugs effektiv reduziert und die nichtsdestoweniger auf einfache und wenig aufwendige Weise realisierbar ist.

Zur Lösung dieses technisches Problems lehrt die Erfindung eine Kraftfahrzeug-Luftleitvorrichtung, insbesondere für einen Lastkraftwagen, wobei zumindest ein flächiger Luftleitflügel in einem unteren Anschlussbereich eines Hecks des Fahrzeuges an das Fahrzeug anschließbar ist bzw. angeschlossen ist, wobei der untere Anschlussbereich 50 bis 220 cm, vorzugsweise 60 bis 210 cm und insbesondere 80 bis 210 cm oberhalb der unteren Radfläche eines Hinterrades des Kraftfahrzeuges bzw. oberhalb des Erdbodens angeordnet ist,
wobei der Luftleitflügel im unteren Anschlussbereich verstellelementfrei bzw. aktuatorelementfrei an das Heck des Kraftfahrzeuges anschließbar ist bzw. angeschlossen ist, wobei der Luftleitflügel an einem oberen Luftleitelement des Kraftfahrzeuges mit der Maßgabe anschließbar ist bzw. angeschlossen ist, dass der Luftleitflügel mit dem oberen Luftleitelement von einer Ruheposition in eine Betriebsposition und umgekehrt überführbar ist - vorzugswiese schwenkbar ist - und wobei
der Luftleitflügel flexibel ausgebildet ist bzw. aus einem flexiblen Material ausgebildet is wobei der Luftleitflügel (5) aus einem flexibleren Material besteht als das Luftleitelement (6), und/oder über eine Sollbruchstelle bzw. Sollbruchlinie mit dem oberen Luftleitelement verbunden ist.

Dass der Luftleitflügel verstellelementfrei bzw. aktuatorelementfrei an das Heck des Kraftfahrzeuges angeschlossen ist, meint im Rahmen der Erfindung insbesondere, dass an dem Luftleitflügel kein Verstellelement bzw. kein Aktuatorelement zum Verschwenken des Luftleitflügels angeschlossen ist. Es liegt vielmehr im Rahmen der Erfindung, dass der Luftleitflügel durch Verschwenkung des zugeordneten Luftleitelementes gleichsam mitbewegt wird. Weiterhin liegt es im Rahmen der Erfindung, dass an das Luftleitelement zumindest ein Verstellelement bzw. zumindest ein Aktuatorelement zur Verschwenkung des Luftleitelementes angeschlossen ist. Zweckmäßigerweise sind an dem Luftleitflügel keine Bauelemente angeschlossen, die mit dem Heck des Kraftfahrzeuges verbunden sind. Vielmehr ist nach bevorzugter Ausführungsform der Erfindung der Luftleitflügel ausschließlich an dem (zugeordneten) oberen Luftleitelement angeschlossen, mit dem er von der Ruheposition in die Betriebsposition und umgekehrt überführbar ist.

Es liegt im Rahmen der Erfindung, dass der zumindest eine Luftleitflügel an dem Heck eines Trailers eines Lastkraftwagens anschließbar ist bzw. angeschlossen ist. Grundsätzlich kann der zumindest eine erfindungsgemäße Luftleitflügel aber auch an dem Heck jedes Fahrzeuges bzw. Lastkraftwagens angeschlossen sein.

Es liegt weiterhin im Rahmen der Erfindung, dass der Luftleitflügel in seiner Betriebsposition an einer heckseitigen Fahrzeugkante des Fahrzeuges bzw. des Trailers angeordnet ist. Zweckmäßigerweise ist der Luftleitflügel an einer heckseitigen Seitenkante des Fahrzeuges bzw. des Trailers vorgesehen und bildet dort vorzugsweise eine tangentiale Verlängerung der Seitenfläche des Fahrzeuges bzw. des Trailers. Es empfiehlt sich, dass der zumindest eine Luftleitflügel in seiner Ruheposition an das Heck des Fahrzeuges bzw. Trailers angeklappt ist und vorzugsweise flächig angeklappt ist.

Eine sehr bevorzugte Ausführungsform der Erfindung ist dadurch gekennzeichnet, dass die obere Kante des Luftleitflügels an die untere Kante des Luftleitelementes angeschlossen ist. Vorzugsweise ist die obere Kante des Luftleitflügels unmittelbar und bevorzugt formschlüssig an die untere Kante des Luftleitelementes angeschlossen. Es empfiehlt sich, dass zumindest die Außenfläche des Luftleitflügels bündig an die Außenfläche der Luftleitfläche anschließt. Es liegt im Rahmen der Erfindung, dass die Außenfläche des Luftleitflügels mit der Außenfläche des Luftleitelementes fluchtet. Außenfläche des Luftleitflügels bzw. Außenfläche des Luftleitelementes meint im Rahmen der Erfindung insbesondere die Außenoberfläche des Luftleitflügels bzw. des Luftleitelementes, die vorzugsweise in der Betriebsposition mit einer Seitenfläche des Fahrzeuges bzw. des Trailers fluchtet und/oder die in der Ruheposition die nach außen gerichtete Oberfläche des Luftleitflügels bzw. des Luftleitelementes bildet.

Eine besonders zweckmäßige Ausgestaltung der Erfindung zeichnet sich dadurch aus, dass zumindest der obere Bereich des Luftleitflügels die Kontur zumindest des unteren Bereiches des Luftleitelementes nachbildet. Wenn beispielsweise der obere Bereich des Luftleitflügels im Querschnitt geradlinig ausgebildet ist, meint dies im Rahmen der Erfindung, dass auch der untere Bereich des Luftleitelementes im Querschnitt geradlinig ausgeführt ist. Wenn dagegen der obere Bereich des Luftleitflügels im Querschnitt gekrümmt ausgebildet ist, wird gemäß dieser Ausführungsform der Erfindung auch der untere Bereich des Luftleitelementes eine entsprechende Krümmung aufweisen.

Eine ganz besonders bevorzugte Ausführungsform der Erfindung ist dadurch gekennzeichnet, dass die Außenfläche bzw. Außenoberfläche des Leitflügels sowohl in der Ruheposition als auch in der Betriebsposition bündig und vorzugsweise lückenlos bzw. im Wesentlichen lückenlos an die Außenfläche bzw. Außenoberfläche des Luftleitelementes anschließt.

Es liegt im Rahmen der Erfindung, dass der zumindest eine Luftleitflügel aus einem zu dem Material des Luftleitelementes unterschiedlichen Material besteht. Es empfiehlt sich, dass der zumindest eine Luftleitflügel aus zumindest einem Material aus der Gruppe "Elastomerer Werkstoff, Gummi, Kunststoff" besteht. Grundsätzlich kann der Luftleitflügel auch aus Leder oder einem ähnlichen Material bestehen. Empfohlenermaßen weist das Material des Luftleitflügels eine Härte von maximal 60 Shore A auf. Es liegt im Rahmen der Erfindung, dass der zumindest eine Luftleitflügel zumindest bereichsweise elastisch ausgebildet ist. Vorzugsweise sind zumindest 50%, bevorzugt zumindest 65% und sehr bevorzugt zumindest 85% des Luftleitflügels aus einem elastischen Material ausgebildet. - Die flexible und/oder weiche und/oder elastische Ausgestaltung des Luftleitflügels bedingt den beachtlichen Vorteil, dass bei Anordnung des Luftleitflügels im unteren Heckbereich nichtsdestoweniger eine ausreichende Crashsicherheit gewährleistet ist. Der Erfindung liegt insoweit die Erkenntnis zugrunde, dass insbesondere beim Aufprall von Fahrzeugen bzw. PKWs der Luftleitflügel nachgibt bzw. verformt wird und insoweit als aus dem unteren Heckbereich herausragende Komponente kein Problem darstellt.

Gemäß der zweiten erfindungsgemäßen Ausführungsvariante ist der Luftleitflügel über eine Sollbruchstelle bzw. Sollbruchlinie mit dem oberen Luftleitelement verbunden. Auch diese Ausführungsvariante gewährleistet eine ausreichende Crashsicherheit am Heck des Fahrzeuges bzw. des Lastkraftwagens. Beim Aufprall eines nachfolgenden Fahrzeuges bzw. PKWs bricht der Luftleitflügel ohne weiteres von dem darüber angeordneten Luftleitelement ab und stellt auch hier als aus dem Heck herausragende Komponente deshalb kein Problem dar. Es liegt im Rahmen der Erfindung, dass die Sollbruchstelle bzw. Sollbruchlinie mit der Maßgabe ausgebildet ist, dass in einem Crashfall ein unmittelbares Abbrechen des Luftleitflügels von dem Luftleitelement möglich ist. Bei dieser Ausführungsform ist es im Übrigen nicht zwingend erforderlich, dass der Luftleitflügel flexibel ausgebildet ist bzw. aus einem flexiblen Material ausgebildet ist. Zweckmäßigerweise befindet sich die Sollbruchstelle bzw. Sollbruchlinie minimal 2 Meter über dem Erdboden bzw. oberhalb der unteren Radfläche eines Hinterrades des Fahrzeuges.

Gemäß empfohlener Ausführungsform der Erfindung beträgt die Höhe bzw. die vertikale Höhe h des Luftleitflügels 5 bis 140 cm, vorzugsweise 7 bis 70 cm und bevorzugt 10 bis 50 cm. Vertikale Höhe h bezieht sich dabei auf den Betriebszustand bzw. Fahrzustand des Fahrzeuges, in dem die Räder des Fahrzeuges auf einem horizontalem Erdboden aufstehen. - Nach besonders empfohlener Ausführungsform der Erfindung erstreckt sich der Luftleitflügel eines Lastkraftwagens bzw. eines Trailers nach unten hin maximal bis zur Ladeebene des Lastkraftwagens bzw. des Trailers. Zweckmäßigerweise ist der Luftleitflügel bzw. sind die Luftleitflügel so angeordnet, dass die Türgriffe der Hecktüren des Fahrzeuges bzw. des Trailers nicht von dem Luftleitflügel bzw. nicht von den Luftleitflügeln bedeckt sind und somit bevorzugt problemlos zugänglich sind.

Eine sehr bevorzugte Ausführungsform der Erfindung ist dadurch gekennzeichnet, dass die Dicke des Luftleitflügels 2 bis 30 mm, vorzugsweise 3 bis 25 mm, bevorzugt 3 bis 10 mm und besonders bevorzugt 5 bis 10 mm beträgt. Nach einer empfohlenen Ausführungsvariante der Erfindung nimmt die Dicke des Luftleitflügels zumindest bereichsweise von oben nach unten hin ab und/oder das Material des Luftleitflügels wird zumindest bereichsweise von oben nach unten hin weicher. Die Begriffe oben und unten beziehen sich hier wiederum auf den Betriebszustand des Fahrzeuges.

Eine bewährte Ausführungsform der Erfindung zeichnet sich dadurch aus, dass die untere Kante des Luftleitflügels mindestens 60 cm, vorzugsweise mindestens 65 cm oberhalb der unteren Radfläche eines Hinterrades des Kraftfahrzeuges bzw. oberhalb des Erdbodens angeordnet ist. Zweckmäßigerweise ist die obere Kante des Luftleitflügels mindestens 190 cm, vorzugsweise mindestens 200 cm und bevorzugt mindestens 205 cm oberhalb der unteren Radfläche eines Hinterrades des Kraftfahrzeuges bzw. oberhalb des Erdbodens ange-ordnet.

Eine ganz besonders bevorzugte Ausführungsform zeichnet sich dadurch aus, dass zumindest zwei flächige Luftleitflügel - vorzugsweise zwei flächige Luftleitflügel - mit Abstand zueinander im unteren Anschlussbereich des Hecks des Fahrzeuges an das Fahrzeug anschließbar sind bzw. angeschlossen sind. Empfohlenermaßen sind die beiden Luftleitflügel in ihrer Betriebsposition an den gegenüberliegenden heckseitigen Fahrzeugkanten bzw. Fahrzeugseitenkanten des Fahrzeuges bzw. des Trailers angeordnet. Vorzugsweise bilden beide Luftleitflügel in ihrer Betriebsposition eine Konturverlängerung der Seitenflächen des Fahrzeuges bzw. des Trailers. Zweckmäßigerweise bilden sowohl die beiden gegenüberliegenden Luftleitflügel als auch die daran jeweils ange-schlossenen Luftleitelemente jeweils eine Konturverlängerung einer Seiten-fläche des Fahrzeuges bzw. des Trailers.

Es liegt im Rahmen der Erfindung, dass ein Luftleitelement jeweils mit Hilfe zumindest eines Verstellelementes von der Ruheposition in die Betriebsposition und umgekehrt überführbar ist. Es liegt weiterhin im Rahmen der Erfindung, dass der an ein Luftleitelement angeschlossene Luftleitflügel dabei von dem Luftleitelement aus der Ruheposition in die Betriebsposition und umgekehrt mitgenommen wird. Fernerhin liegt es im Rahmen der Erfindung, dass an einen erfindungsgemäßen Luftleitflügel kein Verstellelement bzw. kein Aktuatorelement angeschlossen ist. - Die Verbindung zwischen einem erfindungsgemäßen Luftleitflügel und einem darüber angeordneten Luftleitelement kann über geeignete Fixierungselemente erfolgen, beispielsweise über eine Nietverbindung und/oder über eine Nut-Feder-Verbindung. Grundsätzlich ist hier auch eine Rastverbindung zwischen Luftleitflügel und Luftleitelement denkbar.

Gemäß besonders bevorzugter Erfindungsvariante sind die Luftleitflügel flexibel ausgebildet bzw. aus einem flexiblen Material ausgebildet. Nach einer empfohlenen Ausführungsform der Erfindung ist ein an einen Luftleitflügel angeschlossenes Luftleitelement in diesem Fall starr bzw. in sich starr ausgebildet. Das Luftleitelement kann dabei aus einem starren Metallteil bzw. Metallblech oder aus einem starren Kunststoffteil gebildet sein.

Gemäß einer Ausführungsvariante der Erfindung weist ein Luftleitflügel - zweckmäßigerweise im Bereich seiner Unterkante - zumindest einen Magneten auf, welcher Magnet in der Betriebsposition des Luftleitflügels mit zumindest einem an einer Fahrzeugseitenkante bzw. Trailerseitenkante angeordneten Gegenmagneten wechselwirkt. Infolge der magnetischen Kraft schnappt der Luftleitflügel in der Betriebsposition an die Fahrzeugseitenkante an und bildet dadurch einen aerodynamisch vorteilhaften geschlossenen Übergang zwischen der Seitenfläche des Fahrzeuges bzw. des Trailers und dem Luftleitflügel. Bei der Überführung des Luftleitflügels in die Ruheposition löst sich die magnetische Verbindung wieder. - Es liegt im Übrigen im Rahmen der Erfindung, dass ein Luftleitflügel beim Überführen in die Ruheposition (mit Hilfe des Luftleitelementes) hier in eine gefaltete Verstaustellung gelangt.

Grundsätzlich kann ein erfindungsgemäßer Luftleitflügel Verstärkungsstrukturen bzw. Versteifungsstrukturen aufweisen, die zweckmäßigerweise auf der Innenseite des Luftleitflügels ausgebildet sind. Es versteht sich, dass diese Strukturen so ausgeführt werden, dass sie die Crashsicherheit nicht beeinträchtigen. Gemäß einer bevorzugten Ausführungsvariante weist ein Luftleitflügel an seiner (in der Betriebsposition) fahrzeugseitigen Vorderkante eine starre bzw. steife Verstärkung auf. Dadurch wird die Form des Luftleitflügels bei Windeinflüssen stabilisiert. Da diese Verstärkung fahrzeugseitig angeordnet ist, beeinträchtigt sie die Crashsicherheit nicht. - Es liegt im Übrigen im Rahmen der Erfindung, dass das Material eines erfindungsgemäßen Luftleitflügels von oben nach unten hin weicher und/oder flexibler und/oder dünner wird.

Der Erfindung liegt die Erkenntnis zugrunde, dass mit der erfindungsgemäßen Luftleitvorrichtung der Strömungswiderstand bzw. Luftwiderstand von Fahrzeugen besonders effektiv und funktionssicher herabgesetzt werden kann. Dies wird mit relativ einfachen und kostengünstigen Mitteln bzw. Maßnahmen erreicht. Der Erfindung liegt insbesondere auch die Erkenntnis zugrunde, dass dabei der untere Heckbereich von Lastkraftwagen effizient für die Reduzierung des Luftwiderstandes eingesetzt werden kann ohne dass die Crashsicherheit des Fahrzeuges im Heckbereich beeinträchtigt wird. Die erfindungsgemäße Ausgestaltung der Luftleitflügel bedingt im Crashfall keine nachteiligen Auswirkungen von herausragenden bzw. vorkragenden Bauteilen. Durch die Kombination der Luftleitflügel im unteren Heckbereich mit den Luftleitelementen können besonders optimale aerodynamische Eigenschaften erzielt werden. Die Überführung bzw. Verschwenkung von der Ruheposition in die Betriebsposition ist durch das kombinierte Aggregat aus Luftleitelement und Luftleitflügel besonders einfach und problemlos möglich. Der Erfindung liegt insbesondere auch die Erkenntnis zugrunde, dass ein erfindungsgemäßer Luftleitflügel trotz oder vielmehr aufgrund seiner flexiblen bzw. elastischen Ausgestaltung ganz besonders vorteilhafte aerodynamische Eigenschaften aufweist. Ein solcher Luftleitflügel passt sich vor allem gleichsam selbstständig an die aerodynamischen Gegebenheiten an. - Insgesamt zeichnet sich die Erfindung durch Effizienz und zugleich geringen Aufwand aus.

Nachfolgend wird die Erfindung anhand einer lediglich ein Ausführungsbeispiel darstellenden Zeichnung näher erläutert. Es zeigen in schematischer Darstellung:
- Figur 1: eine Seitenansicht eines Lastkraftwagens mit einer erfindungsgemäßen Luftleitvorrichtung am Heckbereich des Trailers,
- Figur 2: eine perspektivische Ansicht des Heckbereichs und
- Figur 3: eine Rückansicht des Heckbereichs.

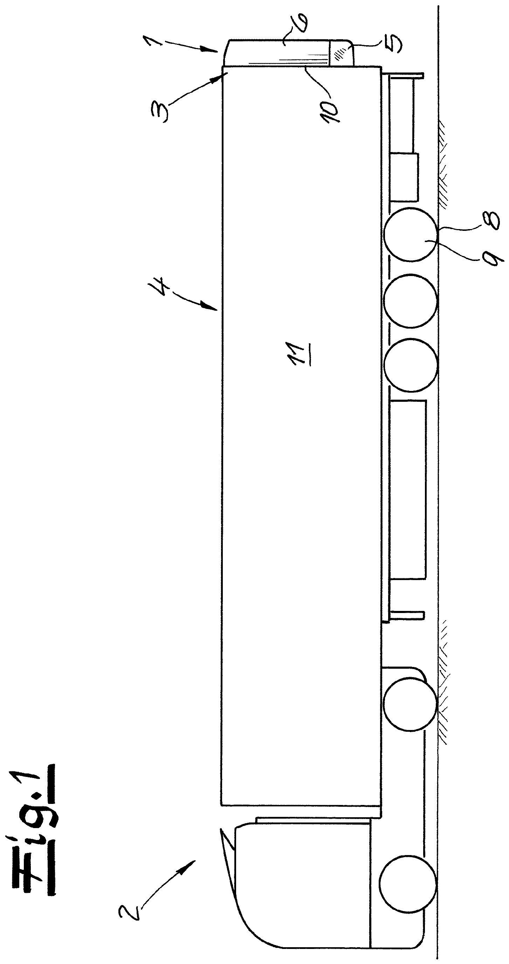

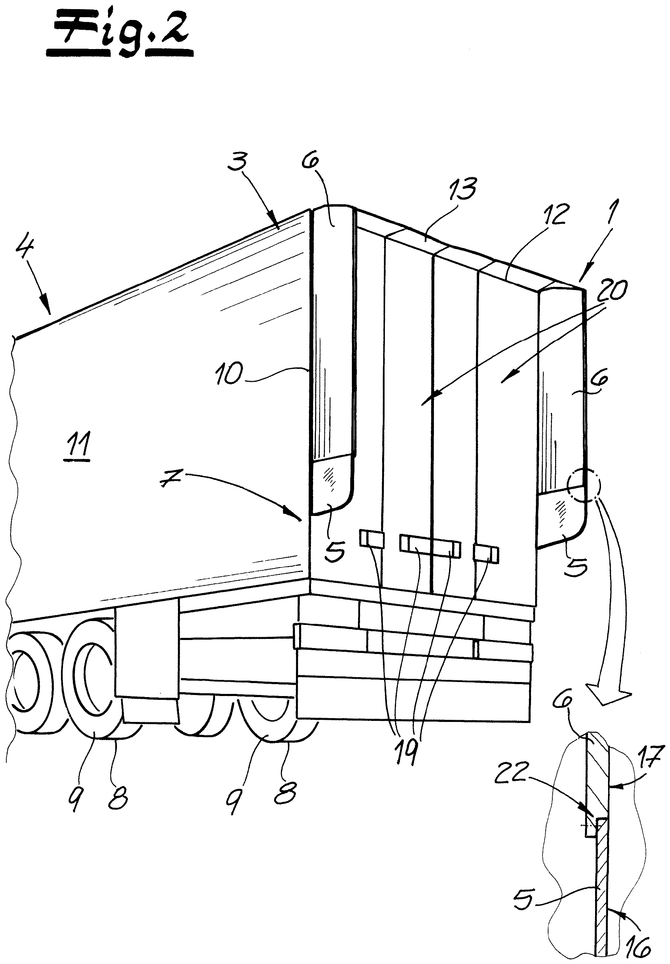

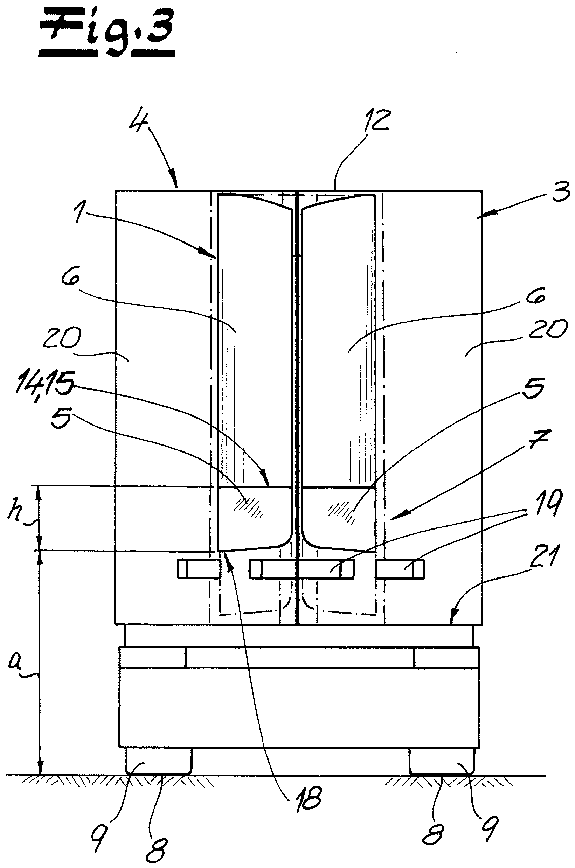

Die Figuren zeigen eine erfindungsgemäße Kraftfahrzeug-Luftleitvorrichtung 1 an einem Lastkraftwagen 2, wobei die Luftleitvorrichtung 1 am Heck 3 eines Trailers 4 des Lastkraftwagens 1 angeordnet ist. Die erfindungsgemäße Luftleitvorrichtung 1 weist im Ausführungsbeispiel nach den Figuren zwei Luftleitflügel 5 auf, die jeweils an der Unterseite eines Luftleitelementes 6 bzw. eines vertikalen Luftleitelementes 6 angeschlossen sind. Die beiden vertikalen Luftleitelemente 6 sowie die daran angeschlossenen Luftleitflügel 5 sind dabei an gegenüberliegenden Seiten des Hecks 3 mit dem Trailer 4 verbunden. Die flächigen Luftleitflügel 5 sind in einem unteren Anschlussbereich 7 des Hecks 3 angeschlossen, wobei der untere Anschlussbereich 7 im Ausführungsbeispiel 60 bis 200 cm oberhalb der unteren Radfläche 8 eines Hinterrades 9 angeordnet ist. Die Luftleitflügel 5 sind in dem unteren Anschlussbereich 7 verstellelementfrei bzw. aktuatorelementfrei an das Heck 3 des Lastkraftwagens 2 angeschlossen. Die Luftleitflügel 5 sind vielmehr jeweils an einem oberen Luftleitelement 6 mit der Maßgabe angeschlossen, dass ein Luftleitflügel 5 mit dem zugeordneten oberen Luftleitelement 6 von einer Ruheposition in eine Betriebsposition und umgekehrt überführbar bzw. schwenkbar ist. In den Figuren 1 und 2 ist im Übrigen die Betriebsposition dargestellt und in der Figur 3 die Ruheposition. Zweckmäßigerweise ist an jedem vertikalen Luftleitelement 6 zumindest ein Verstellelement vorgesehen und zwar zum Überführen bzw. Verschwenken des Luftleitelementes 6 mitsamt des daran angeschlossenen Luftleitflügels 5 von der Ruheposition in die Betriebsposition und umgekehrt. Die Verstellelemente sind in den Figuren nicht dargestellt worden.

Gemäß einer bevorzugten Ausführungsform und im Ausführungsbeispiel sind die Luftleitflügel 5 flexibel ausgebildet bzw. aus einem flexiblen Material gebildet. Es liegt dabei im Rahmen der Erfindung, dass die Luftleitflügel 5 aus einem flexibleren Material bestehen als die zugeordneten Luftleitelemente 6. Nach einer Ausführungsvariante und dem Ausführungsbeispiel mögen die Luftleitflügel 5 aus Gummi bestehen. Die daran angeschlossenen zugeordneten Luftleitelemente 6 bestehen beispielsweise aus Metall oder Kunststoff, wobei der Kunststoff weniger flexibel bzw. weniger elastisch ist als das Gummimaterial der Luftleitflügel 5.

Insbesondere in der Figur 2 ist erkennbar, dass die beiden Luftleitflügel 5 und die damit verbundenen Luftleitelemente 6 in ihrer Betriebsposition jeweils an einer heckseitigen Seitenkante 10 des Trailers 4 angeordnet sind. Sie bilden dort eine Konturverlängerung bzw. eine tangentiale Verlängerung der jeweiligen Seitenfläche 11 des Trailers 4. Im Ausführungsbeispiel ist an der heckseitigen Oberkante 12 des Trailers 4 zusätzlich ein horizontales Luftleitelement 13 angeschlossen.

In den Figuren ist weiterhin erkennbar, dass nach bevorzugter Ausführungsform und im Ausführungsbeispiel die obere Kante 14 eines Luftleitflügels unmittelbar und formschlüssig an die untere Kante 15 des zugeordneten Luftleitelementes 6 angeschlossen ist. Der obere Bereich eines Luftleitflügels 5 bildet dabei die Kontur des unteren Bereiches des Luftleitelementes 6 nach. Bevorzugt und im Ausführungsbeispiel schließt die Außenfläche 16 des Leitflügels 5 sowohl in der Ruheposition (Figur 3) als auch in der Betriebsposition (Figuren 1 und 2) bündig und lückenlos an die Außenfläche 17 des jeweiligen Luftleitelementes 6 an. Die vertikale Höhe h eines Luftleitflügels 5 mag im Ausführungsbeispiel 60 cm betragen. Die Unterkante 18 eines Luftleitflügels 5 ist im Ausführungsbeispiel in einem Abstand a von 140 cm zu der unteren Radfläche 8 eines Hinterrades 9 angeordnet.

Insbesondere in der Figur 3 ist erkennbar, dass bevorzugt und im Ausführungsbeispiel die erfindungsgemäßen Luftleitflügel 5 oberhalb der Türgriffe 19 der Hecktüren 20 angeordnet sind und auch oberhalb der Ladefläche 21 des Trailers 4. Insoweit entstehen hier keine Zwänge und alle Bereiche des Hecks sind problemlos zugänglich.

Die Luftleitflügel 5 sind erfindungsgemäß im unteren Anschlussbereich 7 am Heck 3 des Trailers 4 vorgesehen. Aufgrund der Flexibilität dieser Luftleitflügel 5 stellen sie aber im Crashfall - insbesondere beim Aufprall eines PKWs auf das Heck 3 - als in diesem Bereich befindliche Bauelemente kein Problem dar, weil sie bei mechanischer Beaufschlagung einfach und zwangfrei nachgeben.

In der Figur 3 ist erkennbar, dass im Ausführungsbeispiel die Luftleitelemente 6 und die daran angeschlossenen Luftleitflügel 5 in der Ruheposition unmittelbar nebeneinander angeordnet sind. Durch nicht dargestellte Verstellelemente an den Luftleitelementen 6 wird die Luftleitvorrichtung 1 mit der Maßgabe in die Betriebsposition verschwenkt, dass die Luftleitelemente 6 und Luftleitflügel 5 mit ihren Kanten an den Seitenkanten 10 des Hecks 3 anschließen.

In dem vergrößerten Ausschnitt der Figur 2 ist eine Seitenansicht des Übergangsbereiches zwischen einem Luftleitelement 6 und dem daran angeschlossenen Luftleitflügel 5 gezeigt. Der Luftleitflügel 5 ist hier dünner ausgebildet als das daran angeschlossene Luftleitelement 6. Zwecks Anschluss an das Luftleitelement 6 fasst der Luftleitflügel 5 in eine Stufennut 22 des Luftleitelementes 6 ein. Nichtsdestoweniger schließt die Außenfläche 16 des Luftleitflügels 5 bündig an die Außenfläche 17 des Luftleitelementes 6 an.

In der Figur 3 ist im Übrigen strichpunktiert eine zweite Ausführungsform für die erfindungsgemäßen Luftleitflügel 5 dargestellt. Hier weisen die Luftleitflügel 5 eine größere vertikale Höhe h auf und ragen bis kurz oberhalb der Ladefläche 21 des Trailers 4. Auch diese Luftleitflügel 5 mögen im Ausführungsbeispiel aus einem flexiblen Material, insbesondere aus Gummi bestehen.

## Patentansprüche

1. Kraftfahrzeug-Luftleitvorrichtung (1), insbesondere für einen Lastkraftwagen (2), wobei zumindest ein flächiger Luftleitflügel (5) in einem unteren Anschlussbereich (7) eines Hecks (3) des Fahrzeuges an das Fahrzeug anschließbar bzw. angeschlossen ist, wobei der untere Anschlussbereich 50 bis 220 cm, vorzugsweise 60 bis 210 cm, insbesondere 80 bis 210 cm oberhalb der unteren Radfläche (8) eines Hinterrades (9) des Kraftfahrzeuges angeordnet ist, wobei der Luftleitflügel (5) im unteren Anschlussbereich (7) verstellelementfrei bzw. aktuatorelementfrei an das Heck (3) des Kraftfahrzeuges anschließbar ist bzw. angeschlossen ist, wobei der Luftleitflügel (5) an einem oberen Luftleitelement (6) des Kraftfahrzeuges mit der Maßgabe anschließbar ist bzw. angeschlossen ist, dass der Luftleitflügel (5) mit dem oberen Luftleitelement (6) von einer Ruheposition in eine Betriebsposition und umgekehrt überführbar - vorzugsweise schwenkbar - ist, und wobei
der Luftleitflügel (5) flexibel ausgebildet ist bzw. aus einem flexiblen Material ausgebildet ist, **dadurch gekennzeichnet, dass** der Luftleitflügel (5) aus einem flexibleren Material besteht als das Luftleitelement (6),
und/oder über eine Sollbruchstelle bzw. Sollbruchlinie mit dem oberen Luftleitelement verbunden ist.

2. Luftleitvorrichtung nach Anspruch 1, wobei der Luftleitflügel (5) an dem Heck (3) eines Trailers (4) eines Lastkraftwagens (3) anschließbar ist bzw. angeschlossen ist.

3. Luftleitvorrichtung nach einem der Ansprüche 1 oder 2, wobei der Luftleitflügel (5) in seiner Betriebsposition an einer heckseitigen Fahrzeugkante des Fahrzeuges bzw. des Trailers (4) angeordnet ist und dort vorzugsweise eine tangentiale Verlängerung der Seitenfläche (11) des Fahrzeuges bzw. des Trailers (4) bildet.

4. Luftleitvorrichtung nach einem der Ansprüche 1 oder 3, wobei die obere Kante (14) des Luftleitflügels (5) - vorzugsweise unmittelbar und bevorzugt form-schlüssig - an die untere Kante (15) des Luftleitelementes (6) angeschlossen ist.

5. Luftleitvorrichtung nach einem der Ansprüche 1 bis 4, wobei zumindest die Außenfläche (16) des Luftleitflügels (5) bündig an die Außenfläche (17) des Luftleitelementes (6) anschließt.

6. Luftleitvorrichtung nach einem der Ansprüche 1 bis 5, wobei zumindest der obere Bereich des Luftleitflügels (5) die Kontur zumindest des unteren Bereiches des Luftleitelementes (6) nachbildet.

7. Luftleitvorrichtung nach einem der Ansprüche 1 bis 6, wobei die Außenfläche des Leitflügels (5) sowohl in der Ruheposition als auch in der Betriebsposition bündig und vorzugsweise lückenlos an die Außenfläche des Luftleitelementes (6) anschließt.

8. Luftleitvorrichtung nach einem der Ansprüche 1 bis 7, wobei der Luftleitflügel (5) aus einem zu dem Material des Luftleitelementes (6) unterschiedlichen Material besteht.

9. Luftleitvorrichtung nach einem der Ansprüche 1 bis 8, wobei der Luftleitflügel (5) aus zumindest einem Material aus der Gruppe "elastomerer Werkstoff, Gummi, Kunststoff" besteht.

10. Luftleitvorrichtung nach einem der Ansprüche 1 bis 9, wobei das Material des Luftleitflügels (5) eine Härte von maximal 60 Shore A aufweist.

11. Luftleitvorrichtung nach einem der Ansprüche 1 bis 10, wobei der Luftleitflügel (5) zumindest bereichsweise elastisch ausgebildet ist.

12. Luftleitvorrichtung nach einem der Ansprüche 1 bis 11, wobei die Höhe bzw. die vertikale Höhe des Luftleitflügels (5) 5 bis 140 cm, vorzugsweise 7 bis 70 cm und bevorzugt 10 bis 50 cm beträgt.

13. Luftleitvorrichtung nach einem der Ansprüche 1 bis 12, wobei der Luftleitflügel (5) eines Lastkraftwagens (2) bzw. eines Trailers (4) sich nach unten hin maximal bis zur Ladeebene des Lastkraftwagens bzw. des Trailers erstreckt.

14. Luftleitvorrichtung nach einem der Ansprüche 1 bis 13, wobei die Dicke des Luftleitflügels (5) 2 bis 30 mm, vorzugsweise 3 bis 25 mm und bevorzugt 5 bis 10 mm beträgt.

15. Luftleitvorrichtung nach einem der Ansprüche 1 bis 14, wobei die Dicke des Luftleitflügels (5) zumindest bereichsweise von oben nach unten hin abnimmt und/oder wobei das Material des Luftleitflügels (5) zumindest bereichsweise von oben nach unten hin weicher wird.

16. Luftleitvorrichtung nach einem der Ansprüche 1 bis 15, wobei die Unterkante des Luftleitflügels (5) mindestens 60 cm, vorzugsweise mindestens 65 cm oberhalb der unteren Radfläche (8) eines Hinterrades (9) des Kraftfahrzeuges angeordnet ist.

17. Luftleitvorrichtung nach einem der Ansprüche 1 bis 16, wobei die Oberkante des Luftleitflügels (5) mindestens 190 cm, vorzugsweise mindestens 200 cm und bevorzugt mindestens 205 cm oberhalb der unteren Radfläche (8) eines Hinterrades (9) des Kraftfahrzeuges angeordnet ist.

18. Luftleitvorrichtung nach einem der Ansprüche 1 bis 17, wobei zumindest zwei flächige Luftleitflügel (5) mit Abstand zueinander im unteren Anschlussbereich (7) des Hecks (3) des Fahrzeuges an das Fahrzeug anschließbar sind bzw. angeschlossen sind und wobei die beiden Luftleitflügel (5) vorzugsweise in ihrer Betriebsposition an den gegenüberliegenden heckseitigen Fahrzeugkanten des Fahrzeuges bzw. des Trailers (4) angeordnet sind.

## Claims

1. Motor vehicle air guiding device (1), in particular for a lorry (2), wherein at least one flat air guiding wing (5) can be connected or is connected to the vehicle in a lower connection region (7) of a rear (3) of the vehicle, wherein the lower connection region is arranged 50 to 220 cm, preferably 60 to 210 cm, in particular 80 to 210 cm above the lower wheel surface (8) of a rear wheel (9) of the motor vehicle,
wherein the air guiding wing (5) can be connected or is connected to the rear (3) of the motor vehicle in the lower connection region (7) without adjustment elements or actuator elements, wherein the air guiding wing (5) can be connected or is connected to an upper air guiding element (6) of the motor vehicle with the proviso that the air guiding wing (5), together with the upper air guiding element (6), can be transitioned - preferably, can be pivoted - from a resting position to an operating position and vice versa, and
wherein the air guiding wing (5) is designed to be flexible, or formed from a flexible material, **characterized in that** the air guiding wing (5) consists of a more flexible material than the air guiding element (6),
and/or is connected to the upper air guiding element via a predetermined breaking point or predetermined breaking line.

2. Air guiding device according to claim 1, wherein the air guiding wing (5) can be connected or is connected to the rear (3) of a trailer (4) of a lorry (3).

3. Air guiding device according to any one of claims 1 or 2, wherein the air guiding wing (5) in its operating position is arranged at a rear-sided vehicle edge of the vehicle or the trailer (4) and preferably forms a tangential extension of the lateral surface (11) of the vehicle or the trailer (4) in that location.

4. Air guiding device according to any one of claims 1 or 3, wherein the upper edge (14) of the air guiding wing (5) is connected - preferably directly and preferably with a positive fit - to the lower edge (15) of the air guiding element (6).

5. Air guiding device according to any one of claims 1 to 4, wherein at least the outer surface (16) of the air guiding wing (5) is connected flush to the outer surface (17) of the air guiding element (6).

6. Air guiding device according to any one of claims 1 to 5, wherein at least the upper region of the air guiding wing (5) follows the contour of at least the lower region of the air guiding element (6).

7. Air guiding device according to any one of claims 1 to 6, wherein the outer surface of the guiding wing (5) connects flush, and preferably without a gap, to the outer surface of the air guiding element (6), both in the resting position and in the operating position.

8. Air guiding device according to any one of claims 1 to 7, wherein the air guiding wing (5) consists of a material different from the material of the air guiding element (6).

9. Air guiding device according to any one of claims 1 to 8, wherein the air guiding wing (5) consists of at least one material from the group "elastomeric material, rubber, plastic".

10. Air guiding device according to any one of claims 1 to 9, wherein the material of the air guiding wing (5) has a hardness of no more than 60 Shore A.

11. Air guiding device according to any one of claims 1 to 10, wherein the air guiding wing (5) is designed to be elastic at least in parts.

12. Air guiding device according to any one of claims 1 to 11, wherein the height or the vertical height of the air guiding wing (5) is 5 to 140 cm, preferably 7 to 70 cm, and further preferred 10 to 50 cm.

13. Air guiding device according to any one of claims 1 to 12, wherein the air guiding wing (5) of a lorry (2) or a trailer (4) extends downward no farther than to the loading level of the lorry or trailer.

14. Air guiding device according to any one of claims 1 to 13, wherein the thickness of the air guiding wing (5) is 2 to 30 mm, preferably 3 to 25 mm, and further preferred 5 to 10 mm.

15. Air guiding device according to any one of claims 1 to 14, wherein the thickness of the air wing (5) at least in parts decreases from top to bottom and/or wherein the material of the air guiding wing (5) at least in parts becomes softer from top to bottom.

16. Air guiding device according to any one of claims 1 to 15, wherein the lower edge of the air guiding wing (5) is arranged at least 60 cm, preferably at least 65 cm, above the lower wheel surface (8) of a rear wheel (9) of the motor vehicle.

17. Air guiding device according to any one of claims 1 to 16, wherein the upper edge of the air guiding wing (5) is arranged at least 190 cm, preferably at least 200 cm, and further preferred at least 205 cm above the lower wheel surface (8) of a rear wheel (9) of the motor vehicle.

18. Air guiding device according to any one of claims 1 to 17, wherein at least two flat air guiding wings (5) can be connected or are connected to the vehicle at a distance to each other in the lower connection region (7) of the rear (3) of the vehicle, and wherein the two air guiding wings (5) are preferably arranged at the opposite rear vehicle edges of the vehicle or the trailer (4) in their operating position.

## Revendications

1. Dispositif de guidage d'air (1) pour véhicule automobile, en particulier pour un camion (2), dans lequel au moins un déflecteur d'air plat (5) peut être raccordé ou est raccordé au véhicule dans une zone de raccordement inférieure (7) d'un arrière (3) du véhicule, dans lequel la zone de raccordement inférieure est disposée 50 à 220 cm, de préférence 60 à 210 cm, en particulier 80 à 210 cm au-dessus de la surface inférieure de roue (8) d'une roue arrière (9) du véhicule automobile, dans lequel
le déflecteur d'air (5) dans la zone de raccordement inférieure (7) peut être raccordé ou est raccordé à l'arrière (3) du véhicule automobile sans éléments de réglage ou éléments d'actionnement, dans lequel le déflecteur d'air (5) peut être raccordé ou est raccordé à un élément supérieur de guidage d'air (6) du véhicule automobile à condition que le déflecteur d'air (5) avec l'élément de guidage d'air supérieur (6) puisse être passé d'une position de repos à une position de fonctionnement et inversement - de préférence par pivotement -, et dans lequel
le déflecteur d'air (5) est conçu pour être flexible ou est réalisé en un matériau flexible, **caractérisé en ce que** le déflecteur d'air (5) est réalisée en un matériau plus souple que l'élément de guidage d'air (6),
et/ou est raccordé à l'élément de guidage d'air supérieur via un point de rupture prédéterminé ou une ligne de rupture prédéterminée.

2. Dispositif de guidage d'air selon la revendication 1, dans lequel le déflecteur d'air (5) peut être raccordé ou est raccordé à l'arrière (3) d'une remorque (4) d'un camion (3) .

3. Dispositif de guidage d'air selon une des revendications 1 ou 2, dans lequel le déflecteur d'air (5) est disposé dans sa position de fonctionnement sur un bord arrière du véhicule ou de la remorque (4) et y forme un prolongement tangentiel de la surface latérale (11) du véhicule, resp. de la remorque (4).

4. Dispositif de guidage d'air selon une des revendications 1 ou 3, dans lequel le bord supérieur (14) du déflecteur d'air (5) est raccordé de préférence directement et de préférence par complémentarité de forme au bord inférieur (15) de l'élément de guidage d'air (6).

5. Dispositif de guidage d'air selon une des revendications 1 à 4, dans lequel au moins la surface externe (16) du déflecteur d'air (5) affleure la surface externe (17) de l'élément de guidage d'air (6).

6. Dispositif de guidage d'air selon une des revendications 1 à 5, dans lequel au moins la région supérieure du déflecteur d'air (5) simule le contour d'au moins la région inférieure de l'élément de guidage d'air (6) .

7. Dispositif de guidage d'air selon une des revendications 1 à 6, dans lequel la surface externe du déflecteur d'air (5) aussi bien en position de repos qu'en position de fonctionnement est affleurante et de préférence raccordée de manière transparente à la surface externe de l'élément de guidage d'air (6).

8. Dispositif de guidage d'air selon une des revendications 1 à 7, dans lequel le déflecteur d'air (5) est constitué d'un matériau différent du matériau de l'élément de guidage d'air (6).

9. Dispositif de guidage d'air selon une des revendications 1 à 8, dans lequel le déflecteur d'air (5) est constitué d'au moins un matériau du groupe « matériau élastomère, caoutchouc, plastique ».

10. Dispositif de guidage d'air selon une des revendications 1 à 9, dans lequel le matériau du déflecteur d'air (5) a une dureté maximale de 60 Shore A.

11. Dispositif de guidage d'air selon une des revendications 1 à 10, dans lequel le déflecteur d'air (5) est au moins partiellement élastique.

12. Dispositif de guidage d'air selon une des revendications 1 à 11, dans lequel la hauteur, resp. la hauteur verticale du déflecteur d'air (5) est de 5 à 140 cm, de préférence de 7 à 70 cm et de préférence de 10 à 50 cm.

13. Dispositif de guidage d'air selon une des revendications 1 à 12, dans lequel le déflecteur d'air (5) d'un camion (2) ou d'une remorque (4) s'étend vers le bas au maximum jusqu'au niveau de chargement du camion ou de la remorque.

14. Dispositif de guidage d'air selon une des revendications 1 à 13, dans lequel l'épaisseur du déflecteur d'air (5) est de 2 à 30 mm, de préférence de 3 à 25 mm et de préférence de 5 à 10 mm.

15. Dispositif de guidage d'air selon une des revendications 1 à 14, dans lequel l'épaisseur du déflecteur d'air (5) diminue au moins partiellement de haut en bas et/ou dans lequel le matériau du déflecteur d'air (5) est au moins partiellement plus souple de haut en bas.

16. Dispositif de guidage d'air selon une des revendications 1 à 15, dans lequel le bord inférieur du déflecteur d'air (5) est disposé à au moins 60 cm, de préférence au moins 65 cm au-dessus de la surface inférieure de roue (8) d'une roue arrière (9) du véhicule automobile.

17. Dispositif de guidage d'air selon une des revendications 1 à 16, dans lequel le bord supérieur du déflecteur d'air (5) est disposé à au moins 190 cm, de préférence au moins 200 cm et de préférence au moins 205 cm au-dessus de la surface inférieure de la roue (8) d'une roue arrière (9) du véhicule automobile.

18. Dispositif de guidage d'air selon une des revendications 1 à 17, dans lequel au moins deux déflecteurs d'air plats (5) à distance l'une de l'autre dans la zone de raccordement inférieure (7) de l'arrière (3) du véhicule peuvent être raccordées ou sont raccordées au véhicule, et dans lequel les deux déflecteurs d'air (5) sont de préférence disposés en leur position de fonctionnement sur le bord arrière opposé du véhicule ou de la remorque (4).
